# EUROPEAN PATENT APPLICATION

(11) **EP 4 807 289 A1**
(43) Date of publication of application: **16.09.2026**
(21) Application number: 26161859.9
(22) Date of filing: 03.03.2026
(51) Int. Cl.: F25B 13/00, F25B 41/20

(54) **THERMAL ENERGY STORAGE ARRANGEMENT FOR A HEAT PUMP SYSTEM**

(30) Priority: 05.03.2025 US 202519070649
(71) Applicant: Robert Bosch GmbH, 70442 Stuttgart (DE)
(72) Inventor: Christensen, Jake, Elk Grove, California, 95758 (US)

(57) **Abstract**

A thermal energy storage (TES) arrangement for a heat pump system includes a phase-change material, a TES heat exchanger configured to exchange heat with the phase-change material, and a valve manifold. The valve manifold is fluidly connected to the TES heat exchanger and configured to fluidly connect to a conditioned space heat exchanger of the heat pump system and an ambient heat exchanger of the heat pump system. The valve manifold is configured to selectively form a refrigerant loop between at least two of the TES heat exchanger, the conditioned space heat exchanger, and the ambient heat exchanger.

## Description

### Cross-Reference to Related Applications

This application is related to U.S. Application Serial No. 18/920,102 by Christensen et al., U.S. Application Serial No. 18/920,114 by Christensen et al., U.S. Application Serial No. 18/920,124 by Mayer et al., and U.S. Application Serial No. 18/920,132 by Ji et al., all of which were filed on October 18, 2024, and the contents of all four of which are expressly incorporated herein by reference in their entirety.

### Field

The devices and methods disclosed in this document relate to thermal energy storage and, more particularly, to a thermal energy storage for air conditioner and heat pump systems.

### Background

Increasing the deployment of renewable energy necessitates energy storage in order to accommodate the increasing mismatch between the time of high energy demand (e.g., cooling homes in the summer during the late afternoon/evening) and the time of high rates of electricity generation (e.g., from wind farms that tend to peak at night or photovoltaics that peak mid-day).

Thermal energy storage ("TES") is a relatively cheap, safe and convenient method of energy storage. State-of-the-art heat pump systems are expected to begin incorporating thermal energy storage to enhance energy efficiency and optimize performance by decoupling heating and cooling demands from energy supply fluctuations. Such systems may utilize advanced thermal energy storage technologies, such as phase change materials or high-capacity water tanks, which will allow thermal energy to be stored during off-peak hours and later released when demand peaks.

### Summary

In some aspects, the techniques described herein relate to a thermal energy storage arrangement for a heat pump system. The TES arrangement includes a phase-change material, a TES heat exchanger configured to exchange heat with the phase-change material, and a valve manifold fluidly connected to the TES heat exchanger and configured to fluidly connect to a conditioned space heat exchanger of the heat pump system and an ambient heat exchanger of the heat pump system. The valve manifold is configured to selectively form a refrigerant loop between at least two of the TES heat exchanger, the conditioned space heat exchanger, and the ambient heat exchanger.

In some embodiments, the valve manifold includes a plurality of valves configured to selectively connect the conditioned space heat exchanger, the ambient heat exchanger, and the TES heat exchanger to one another.

In further aspects, the valve manifold further includes a first port and a second port, which are fluidly connected to the ambient heat exchanger, a third port and a fourth port, which are fluidly connected to the conditioned space heat exchanger.

In another embodiment, the plurality of valves includes a first valve, a second valve, a third valve, and a fourth valve, and each of the first, second, third, and fourth valves is configured as a three-way valve. The first valve is connected to the first port, the fourth port, and the second valve. The second valve is connected to the first valve, the third valve, and the fourth valve. The third valve is connected to the second port, a first side of the TES heat exchanger, and the second valve. The fourth valve is connected to the third port, a second side of the TES heat exchanger, and the third valve.

The TES arrangement may further include a TES module, in which the phase-change material and the TES heat exchanger are arranged.

The valve manifold may further include a fifth port and a sixth port, which are fluidly connected to the TES heat exchanger in the TES module.

In some embodiments, the TES arrangement further includes a reversing valve arrangement configured to reverse a direction of flow in the refrigerant loop.

In some aspects, the techniques described herein relate to a TES arrangement in which the valve manifold includes the reversing valve arrangement, and the reversing valve arrangement is arranged between the third valve and the fifth port, and between the fourth valve and the sixth port.

In some embodiments, the TES module includes a second compressor and an expansion valve, which are fluidly connected on opposite sides of the TES heat exchanger.

In another embodiment, the TES module further includes a first pair of valves configured to selectively connect or isolate the second compressor from the refrigerant loop, and a second pair of valves configured to selectively connect or isolate the expansion valve from the refrigerant loop.

In one embodiment, the TES arrangement has a controller operably connected to the valve manifold and configured to operate the valve manifold to selectively connect the conditioned space heat exchanger, the ambient heat exchanger, and the TES heat exchanger to one another.

The controller may be configured to selectively operate the valve manifold in a first mode, a second mode, a third mode, and a fourth mode. In the first mode, controller operates the valve manifold to form the refrigerant loop between the ambient heat exchanger and the TES heat exchanger. In the second mode, controller operates the valve manifold to form the refrigerant loop between the ambient heat exchanger and the conditioned space heat exchanger. In the third mode, controller operates the valve manifold to form the refrigerant loop between the ambient heat exchanger, the TES heat exchanger, and the conditioned space heat exchanger. In the fourth mode, controller operates the valve manifold to form the refrigerant loop between the TES heat exchanger and the conditioned space heat exchanger.

In another embodiment according to the disclosure, a valve manifold comprises a first port and a second port configured to fluidly connect to an ambient heat exchanger of a heat pump system, and a third port and a fourth port configured to fluidly connect to a conditioned space heat exchanger of the heat pump system. A first valve is connected to the first port, the fourth port, and a second valve. The second valve is connected to the first valve, a third valve, and a fourth valve. The third valve is connected to the second port, a first side of a TES heat exchanger, and the second valve. The fourth valve is connected to the third port, a second side of the TES heat exchanger, and the third valve. The valve manifold is configured to selectively form a refrigerant loop between at least two of the TES heat exchanger, the conditioned space heat exchanger via the third and fourth ports, and the ambient heat exchanger via the first and second ports.

In some aspects according to the disclosure, a heat pump system includes: an outdoor unit including an ambient heat exchanger configured to exchange heat with ambient air; an indoor unit including a conditioned space heat exchanger configured to exchange heat with a conditioned space; and a TES arrangement. The TES arrangement includes a phase-change material; a TES heat exchanger configured to exchange heat with the phase-change material; and a valve manifold fluidly connected to the TES heat exchanger, the indoor unit, and the outdoor unit. The valve manifold is configured to selectively form a refrigerant loop between at least two of the TES heat exchanger, the conditioned space heat exchanger, and the ambient heat exchanger.

### Brief Description of the Drawings

Fig. 1 is a schematic depiction of a heat pump system having a thermal energy storage (TES) arrangement according to the disclosure with a valve manifold installed between the indoor and outdoor units.
Fig. 2 is a schematic depiction of the valve manifold of the TES arrangement of the heat pump system of Fig. 1.
Fig. 3 is a schematic depiction of a TES module of the TES arrangement of the heat pump system of Fig. 1.
Fig. 4 is a schematic depiction of a TES module of the TES arrangement of the heat pump system of Fig. 1 having a reversing valve arrangement.
Fig. 5 is a schematic depiction of the valve manifold of the TES arrangement of the heat pump system of Fig. 1 having a reversing valve arrangement.

### Detailed Description

For the purposes of promoting an understanding of the principles of the embodiments described herein, reference is now made to the drawings and descriptions in the following written specification. No limitation to the scope of the subject matter is intended by the references. This disclosure also includes any alterations and modifications to the illustrated embodiments and includes further applications of the principles of the described embodiments as would normally occur to one skilled in the art to which this document pertains.

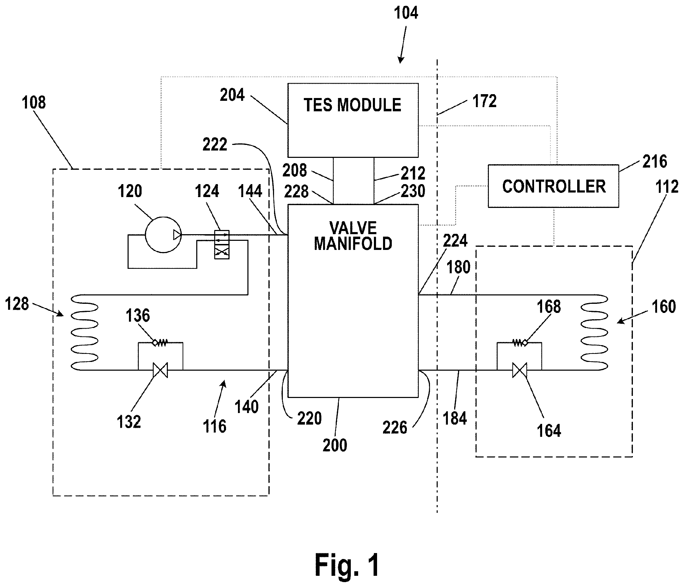

FIG. 1 depicts a heat pump system 100 having a TES arrangement 104. In the exemplary embodiment of the disclosure, the thermal management system is a heat pump system for heating and cooling a building. However, although the features of the disclosure are primarily described with respect to dual heating and cooling heat pump system, it should be appreciated that the thermal management system may similarly comprise a heat pump system used for only heating or only cooling, i.e. an air conditioner for cooling a building, a thermal management system for heating or cooling a motor vehicle cabin, batteries, engine, or other vehicle components, or any other thermal management system that operates using similar principles, such as a refrigerator or freezer.

In the illustrated example, the heat pump system 100 further includes an outdoor unit 108 and an indoor unit 112 that are on opposite sides of the TES arrangement 104. More specifically, the outdoor unit 108 and the indoor unit 112 are connected to one another through the TES arrangement 104 so as to form a refrigerant loop 116. In particular, in some embodiments, the TES arrangement 104 is configured to be installed on an existing heat pump system as a retrofit to increase the efficiency of the existing system and to enable shifting electricity use to times at which electricity is cheaper and/or less CO₂-intensive.

The outdoor unit 108 includes a compressor 120, a reversing valve 124, an ambient heat exchanger referred to as an evaporator coil 128, and an expansion valve 132 arranged in series in the refrigerant loop 116. The outdoor unit 108 may also include a check valve 136 in parallel with the expansion valve 132 so as to bypass the expansion valve 132 when flow is in the direction from the compressor 120 toward the expansion valve 132. The outdoor unit 108 is configured similarly to a conventional outdoor unit of a heat pump such that the outdoor unit either receives relatively cool refrigerant from a first refrigerant line 140 and outputs heated refrigerant to a second refrigerant line 144 in a heating cycle, or receives relatively warm refrigerant from the second refrigerant line 144 and outputs relatively cold refrigerant to the first refrigerant line 140 in a cooling cycle.

The evaporator coil 128 is configured to transfer heat between a first environment, i.e. outside air, and a refrigerant circulating through the refrigerant loop 116. Structurally, in at least some embodiments, the evaporator coil 128 includes a series of coiled metal tubes or metal fins (not shown), through which the refrigerant circulates, that increase the surface area for heat exchange and facilitate the efficient absorption or dissipation of thermal energy. The outdoor unit 108 is arranged outside of a conditioned space (e.g. climate-controlled building, vehicle, room, appliance, battery, etc.) and, in at least some embodiments, is provided in a housing, e.g., metal casing, (not shown) to protect it from environmental factors. Additionally, in some embodiments, a fan is mounted inside the housing to blow air over the coiled tubes or fins of the evaporator coil 128 to provide greater heat transfer.

The indoor unit 112 is configured similar to a conventional indoor unit of a conventional heat pump system, and includes a conditioned space heat exchanger, referred to as a condenser coil 160, and an expansion valve 164. Again, a check valve 168 is arranged in parallel to the expansion valve 164 to enable the expansion valve 132 to be bypassed when flow is in the direction from the condenser coil 160 toward the expansion valve 164.

The condenser coil 160 is configured to transfer heat between the refrigerant circulating through the refrigerant loop 116 and a second environment, i.e. air inside the conditioned space. Structurally, in at least some embodiments, the condenser coil 160 includes a series of coiled metal tubes or metal fins (not shown), through which the refrigerant circulates, that increase the surface area for heat exchange and facilitate the efficient absorption or dissipation of thermal energy. The indoor unit 112 is arranged inside of the building and, in at least some embodiments, is arranged within an indoor ventilation system, such that a fan mounted within the ventilation system blows air through the coiled tubes or fins of the condenser coil 160 to distribute conditioned air throughout the conditioned space.

The indoor unit 112 is connected to a third refrigerant line 180 and a fourth refrigerant line 184, which, as discussed in more detail below, pass through the exterior boundary 172 of the conditioned space, e.g., building, vehicle, etc., and are connected to the first and second refrigerant lines 140, 144 via the TES arrangement 104. As with a conventional heat pump system, the indoor unit 112 is configured to either transfer heat from the refrigerant into the conditioned space via the condenser coil 160 during the heating cycle, or to transfer heat out of the conditioned space into the refrigerant via the condenser coil 160 during the cooling cycle.

The refrigerant loop 116 is a closed, continuous loop system that circulates refrigerant through the various components of the heat pump system 100, enabling the transfer of thermal energy. In some embodiments, the refrigerant loop 116 may more broadly take the form of a thermal energy transport fluid loop that circulates thermal energy transport fluid, including refrigerants such as R-22, R-32, R-125, R-410A, R-134a, R-290, R-407C, and R502, water, glycol solutions (antifreeze), or the like. Thus, references herein to the refrigerant and the refrigerant loop 116 should be understood to alternatively incorporate any thermal energy transport fluid. The refrigerant loop 116 includes tubing that connects the components of the heat pump system 100, including the outdoor unit 108 and the components therein, the indoor unit 112 and the components therein, and the TES arrangement 104 and its associated components. The refrigerant flows through these components in a cyclic process, in some cases undergoing phase changes between liquid and gas as it absorbs or releases heat.

It should be appreciated that the illustrated embodiment of the heat pump system 100 is in the form of an air-source heat pump. However, in alternative embodiments, the heat pump system 100 may take the form of a ground-source (geothermal) heat pump or a water-source heat pump. Ground-source (geothermal) heat pumps transfer heat between the conditioned space and the ground or groundwater. These systems use underground refrigerant loops that absorb heat from the earth or release heat to the earth, which remains at a relatively constant temperature year-round. Similarly, water-source heat pumps exchange heat with a water tank in the building or with a body of water, such as a lake, river, or well, or. These systems draw heat from the water for heating or discharge heat into the water for cooling.

The TES arrangement 104 is configured to be retrofitted onto an existing heat pump system easily and with limited labor required. In particular, as seen in Fig. 1, the TES arrangement 104 is connected inline between the first refrigerant line 140 and fourth refrigerant line 184, which would be a single line in a conventional heat pump system, and between the second refrigerant line 144 and third refrigerant line 180, which would also be a single line in a conventional heat pump system. Thus, in some embodiments, installation of the TES arrangement 104 is accomplished by simply cutting two existing refrigerant lines and connecting these two refrigerant lines to the associated components of the TES arrangement 104.

The TES arrangement 104 includes a valve manifold 200, a TES module 204, which is fluidly connected to the valve manifold 200 via a fifth refrigerant line 208 and a sixth refrigerant line 212, and a Controller 216. The valve manifold 200 is configured as a structural unit that is separate from at least the outdoor unit 108 and the indoor unit 112. In some embodiments, the valve manifold 200 may be integrated with the TES module 204, while in other embodiments, the valve manifold 200 may be structurally separate from the TES module 204 as well.

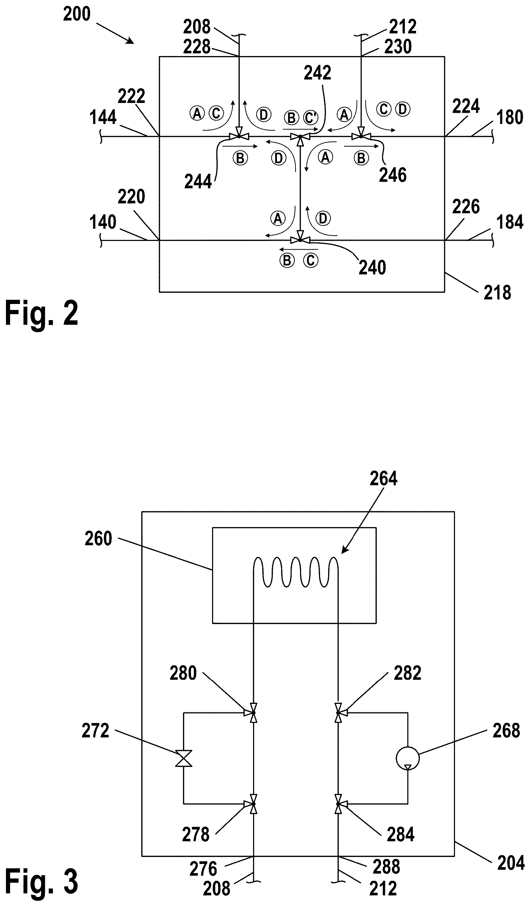

The valve manifold 200 includes a plurality of valves housed within a valve housing 218 (Fig. 2) that has a plurality of ports. More specifically the valve housing 218 has a first port 220, a second port 222, a third port 224, a fourth port 226, a fifth port 228, and a sixth port 230, which are connected respectively to the first through sixth refrigerant lines 140, 144, 180, 184, 208, 212. The valve manifold 200 is configured to direct the refrigerant flow through the refrigerant lines 140, 144, 180, 184, 208, 212 to enable the heat pump system 100 to execute a variety of different heating or cooling modes.

Fig. 2 depicts one embodiment of the valve manifold 200 having four three-way valves configured to control the flow between the refrigerant lines 140, 144, 180, 184, 208, 212. In particular, the valve manifold 200 includes a first valve 240 arranged fluidically between the first port 220 and the fourth port 226, a second valve 242 arranged fluidically between the second port 222 and the third port 224 and connected to the first valve 240, a third valve 244 arranged fluidically between the second refrigerant line 144, the fifth refrigerant line 208, and the second valve 242, and a fourth valve 246 arranged between the second valve 242, the sixth port 230, and the third port 224. Each of the valves may be an electrically-actuated solenoid valve. Alternatively, in some embodiments, the valve manifold 200 may be formed with other valve arrangements that enable control of the fluid flow through the valve manifold 200. For example, in one embodiment, the valve manifold 200 may be formed as a single six-port control valve with a variety of valve positions that enable control of the refrigerant through the desired fluid flow paths, or any other suitable number of valves in an arrangement that enables the desired fluid flow paths.

The valve housing 218 may be configured as a metal, e.g. aluminum, block having passages formed therein by drilling, casting, or 3D printing so as to connect the ports and valves to one another. Alternatively, the valve housing 218 may be a casing surrounding the valves and pipes or other fluid connections housed within the casing. The valves may be, for example, mounted on an exterior of the valve housing 218, or they may be mounted inside or partially inside the valve housing 218.

Fig. 3 illustrates one embodiment of the TES module 204. The TES module 204 includes a phase-change material 260, a TES heat exchanger 264, a compressor 268, and an expansion valve 272. The TES module 204 is configured such that refrigerant flows from a first module port 276, through a pair of valves 278, 280 that either connect or bypass the expansion valve 272, through the TES heat exchanger 264, which exchanges heat with the phase-change material 260, through another pair of valves 282, 284 that either connect or bypass the compressor 268, and through a second module port 288, or *vice-versa.*

The phase-change material 260 is stored in one or more insulated storage tanks (not shown) and includes a thermal storage medium, such as water, phase-change materials, or a mixture of water and phase-change materials. The phase-change material 260 in the thermal energy storage module 130 includes one or more substances that store and release thermal energy through phase changes, typically from solid to liquid or vice versa. In particular, the phase-change material 260 may have a relatively high heat capacity and/or specific heat of phase changes (i.e. specific heat or enthalpy of fusion and/or vaporization). It should be appreciated that the phase-change material 260 may include, for example, water, which has a high heat capacity and specific heat in the phase change between liquid water and ice. When the heat pump system 100 generates excess thermal energy, the phase-change material 260 is charged by absorbing thermal energy such that the phase-change material 260 undergoes a phase change, effectively storing the thermal energy at a constant temperature. Conversely, when there is a demand for thermal energy in the system, the phase-change material 260 can be discharged by releasing the stored thermal energy as the phase-change material 260 reverts to a different phase.

The TES heat exchanger 264 is configured to transfer heat between the refrigerant circulating through the refrigerant loop 116 and the phase-change material 260. Structurally, in at least some embodiments, the TES heat exchanger 264 includes a series of coiled metal tubes or metal fins (not shown), through which the refrigerant circulates. The phase-change material 260 may be arranged within or adjacent to the phase-change material 260 to maximize the contact surface area and ensure efficient heat exchange.

Specifically, as discussed in detail below, the valves 278, 280, 282, 284 enable the compressor 268 and expansion valve 272 to be either bypassed or active depending whether the outdoor unit 108, which includes the compressor 120 and expansion valve 132, is in the active refrigerant loop. Because of this, the compressor 268 may be smaller than the compressor 120, and therefore the compressor 268, when in operation, consumes less power than the compressor 120.

Operation and control of the various components and functions of the system are performed with the aid of the controller 216. The controller 216 is implemented with general or specialized programmable processors that execute programmed instructions. The instructions and data required to perform the programmed functions are stored in the memory unit associated with the controller 216. The processors, the memory, and interface circuitry configure the controller 216 to perform the functions described above and the processes described below. These components can be provided on a printed circuit card or provided as a circuit in an application specific integrated circuit (ASIC). Each of the circuits can be implemented with a separate processor or multiple circuits can be implemented on the same processor. Alternatively, the circuits can be implemented with discrete components or circuits provided in VLSI circuits. Also, the circuits described herein can be implemented with a combination of processors, ASICs, discrete components, or VLSI circuits. The controller 216 may be a discrete control unit added to the heat pump system 100 during a retrofit or, alternatively, the controller 216 may be implemented within an existing controller of the heat pump system 100 via a software and/or hardware update. In addition, in some embodiments, the controller 216 may be remote from the heat pump system 100, for example implemented in a cloud computing arrangement, and connected to the heat pump system 100 via the Internet, a cellular connection, or other suitable connection.

The controller 216 is configured to monitor a variety of parameters including, for example, inside and outside temperatures, temperatures of the refrigerant entering into and leaving from the TES module 204 or phase-change material 260, refrigerant flow rates at different points in the refrigerant loop 116, a compressor frequency of the compressor 120, a density of the phase-change material 260, electrical properties of the phase-change material 260, or magnetic properties of the phase-change material 260. By continuously monitoring these parameters, the controller 216 makes real-time adjustments to the operation of the heat pump system 100, such as modulating the speed of the compressor 120 or adjusting the operation of the valves in the system to store thermal energy in the TES module 204 or release thermal energy from the TES module 204.

In some embodiments, the controller 216 is operably connected to a variety of temperature sensors configured to measure different temperatures within the heat pump system 100. These temperature sensors may comprise thermocouples or thermistors, positioned strategically to measure respective temperatures. In one embodiment, an indoor temperature sensor measures one or both of an ambient indoor temperature (e.g., at a thermostat) and a temperature of the air entering the indoor unit 112. In one embodiment, an outdoor temperature sensor measures one or both of an ambient outdoor temperature and a temperature of the air entering the third refrigerant line 180. In one embodiment, one or more TES temperature sensors measure temperature(s) of the refrigerant entering and/or exiting the TES module 204.

In some embodiments, the controller 216 is operably connected to one or more refrigerant flow rate sensors configured to measure different refrigerant flow rates within the heat pump system 100. The refrigerant flow rate sensor(s) may comprise a variable area flow meter or a similar device designed to detect changes in refrigerant flow. In some embodiments, the one or more refrigerant flow rate sensors include a respective refrigerant flow rate sensor that measures a flow rate through each of the heat exchangers in the heat pump system 100. Particularly, a TES refrigerant flow rate sensor may measure the flow rate of the refrigerant circulating through the TES module 204, an outside refrigerant flow rate sensor may measure the flow rate of the refrigerant circulating through the outdoor unit 108, and/or an inside refrigerant flow rate sensor may measure the flow rate of the refrigerant circulating through the indoor unit 112.

In some embodiments, the controller 216 is operably connected to a compressor frequency sensor (e.g., a tachometer), which is integrated into the compressor 120. The compressor frequency sensor measures the rotational speed of the compressor 120 and/or an operating current frequency of the compressor 120.

Finally, in some embodiments, the controller 216 is operably connected to one or more PCM sensors, which may be integrated with the TES module 204 and configured to directly measure one or more properties of the phase-change material 260. In some embodiments, the PCM sensors include an ultrasonic sensor that measures a density of the phase-change material 260 using ultrasonic measurements, an electrical sensor that measures an electrical property (e.g., a resistance or impedance) of the phase-change material 260, and/or a magnetic sensor that measures a magnetic property of the phase-change material 260.

The controller 216 is configured to selectively operate the heat pump system 100 in either a heating mode, a cooling mode, or a standby mode. In the standby mode, the heat pump system 100 is not actively heating or cooling but remains ready to engage when needed.

More specifically, the controller 216 is operably connected to the outdoor unit 108, specifically at least the compressor 120, the reversing valve 124, and optionally the expansion valve 132, optionally to the indoor unit 112, specifically the expansion valve 132, to the TES module 204, specifically at least the compressor 268 and valves 278, 280, 282, 284 and optionally to the expansion valve 272, and to the valve manifold 200, specifically to the valves 240, 242, 244, 246. The controller 216 is configured to operate the various valves and compressors to selectively operate one of a plurality of modes to charge or discharge the phase-change material 260 and/or heat or cool the conditioned space via the indoor unit 112.

Fig. 2 also depicts the operation of the valves 240-246 by the controller 216 in various heating modes, with the modes identified by letters A-D. In a first heating mode (A), the controller 216 operates the valves 240-246 to charge the phase-change material 260 of the TES module 204 from the outdoor unit 108. It should be appreciated that, as discussed herein, charging the phase-change material 260 refers to adding heat energy to the phase-change material 260, which may for example vaporize or melt a portion of the phase-change material 260, while discharging the phase-change material 260 means removing heat energy from the phase-change material 260, which may for example condense or freeze a portion of the phase-change material 260. In the first heating mode, the compressor 120 of the outdoor unit 108 is active to increase heat and pressure of the refrigerant and move the heated and pressurized refrigerant via the second refrigerant line 144 to the second port 222 of the valve manifold 200. In the valve manifold, the third valve 244 directs the flow to the fifth port 228 and the fifth refrigerant line 208. The refrigerant passes into the TES module 204 via the first module port 276, passes through the valves 278 and 280, and transfers heat into the phase-change material 260 at the TES heat exchanger 264. The now-cooled refrigerant is then output from the TES module 204 via the second module port 288, flows through the refrigerant lines 212 into the sixth port 230 of the valve manifold 200, where it flows through the valves 246, 242, and 240, out the first port 220, and back to the outdoor unit 108 via the first refrigerant line 140. The first heating mode (A) therefore charges the phase-change material 260 by increasing the heat therein, enabling the heat in the phase-change material 260 to be used subsequently to heat the indoor unit 112 as needed.

In the second heating mode (B), the indoor unit 112 is heated via the outdoor unit 108 in a conventional manner. Specifically, the valves 244, 242, and 246 are open to enable flow directly from the second refrigerant line 144 to the third refrigerant line 180, and the first valve 240 is open to enable reverse flow from the fourth refrigerant line 184 to the first refrigerant line 140. In the second heating mode, the TES module 204 is not used.

In the third heating mode (C), the outdoor unit 108 heats both the phase-change material 260 and the indoor unit 112. As in the first heating mode, the compressor 120 of the outdoor unit 108 is active to increase heat and pressure of the refrigerant and move the heated and pressurized refrigerant via the second refrigerant line 144 to the second port 222 of the valve manifold 200. The third valve 244 connects the incoming refrigerant to the fifth refrigerant line 208 via the fifth port 228, and the refrigerant passes through the TES module 204, charging (heating) the phase-change material 260 therein. The valves 282, 284 may, in the third heating mode, optionally connect the compressor 268, which is activated to increase the heat of the refrigerant to account for some of the heat lost to the phase-change material 260. After returning to the valve manifold 200 via the second module port 288, the sixth refrigerant line 212, and the sixth port 230, the fourth valve 246 directs the fluid to the third port 224 and the third refrigerant line 180, such that the refrigerant can then heat the conditioned space via the condenser coil 160 of the indoor unit 112. The refrigerant returns through the valve manifold 200 and flows through the first valve 240 back to the outdoor unit 108 to complete the circuit.

In a variant of the third heating mode (C'), the third valve 244 and the fourth valve 246 may be flow dividing and combining valves. In the C' variant, the flow from the second port 222 is split by the third valve 244 such that a portion travels through the second valve 242, while another portion flows to the TES module 204 via the fifth refrigerant line 208. The refrigerant is then combined via the fourth valve 246 before exiting the valve manifold 200 via the third refrigerant line 180 to heat the indoor unit 112. In this embodiment, only a portion of the refrigerant flowing from the valve manifold 200 to the indoor unit 112 via the third refrigerant line 180 is used to charge the phase-change material 260, leaving the refrigerant with a greater amount of heat to heat the indoor unit 112. The flow splitting may occur by using a valve that is partially open to both outlets so as to split the flow, or a valve that switches between outlets, for example on a short time scale of less than one second by, e.g., PWM operation, or on longer time scales of more than one second, or more than one minute, so as to proportionally split the flow between the two outlets over a defined time period.

In the fourth heating mode (D), the conditioned space is heated from the TES module 204 alone. A refrigerant loop is produced beginning at the fourth refrigerant line 184, via the first valve 240, the second valve 242, and the third valve 244, to the TES module 204 via the fifth refrigerant line 208. The loop continues via the valve 278, which directs the refrigerant flow through the expansion valve 272 and back to the valve 280, and then to the TES heat exchanger 264 to absorb heat from the phase-change material 260 by discharging the phase-change material 260. The refrigerant then flows through the valve 282, is further heated by the compressor 268, and output from the TES module 204 via the valves 284 and the sixth refrigerant line 212. The heated refrigerant then flows, via the fourth valve 246 and the third refrigerant line 180, to the indoor unit 112 to heat the conditioned space. In this heating mode, therefore, the heat pump system 100 forms a refrigerant circuit that is similar to a normal heating mode, except the TES module 204 is used in lieu of the outdoor unit 108 to perform the expansion, heat exchange, and compression.

In a fifth heating mode, the indoor unit 112 is heated by both the outdoor unit 108 and the TES module 204. The fifth heating mode is essentially the same as the third heating mode (C) or (C'), except the phase-change material 260 is already sufficiently charged such that the phase-change material 260 discharges heat into the refrigerant passing through the TES heat exchanger 264, rather than absorbing heat therefrom.

The heat pump system 100 is also configured to cool, or air condition, the conditioned space. Each of the heating modes has a corresponding cooling mode, in which the valve operation is essentially the same as the corresponding heating mode, but the flow is reversed by, for example, the reversing valve 124. For example, in a first cooling mode, the valves are operated in the same manner as the first heating mode (A) with reverse flow, such that the phase-change material 260 is discharged, or cooled, via the outdoor unit 108. Likewise, in second and third cooling modes, respectively, the valves are operated in the same manner as in the second and third heating modes (B) and (C) or (C'), but with flow reversed via the reversing valve 124. Thus, in the second cooling mode, the conditioned space is cooled from the outdoor unit 108, and in the third cooling mode, the conditioned space is cooled from both the TES module 204 and the outdoor unit 108. There is also a fifth cooling mode, which corresponds to the inverse of the fifth heating mode, in which the indoor unit 112 is cooled by both the outdoor unit 108 and the TES module 204.

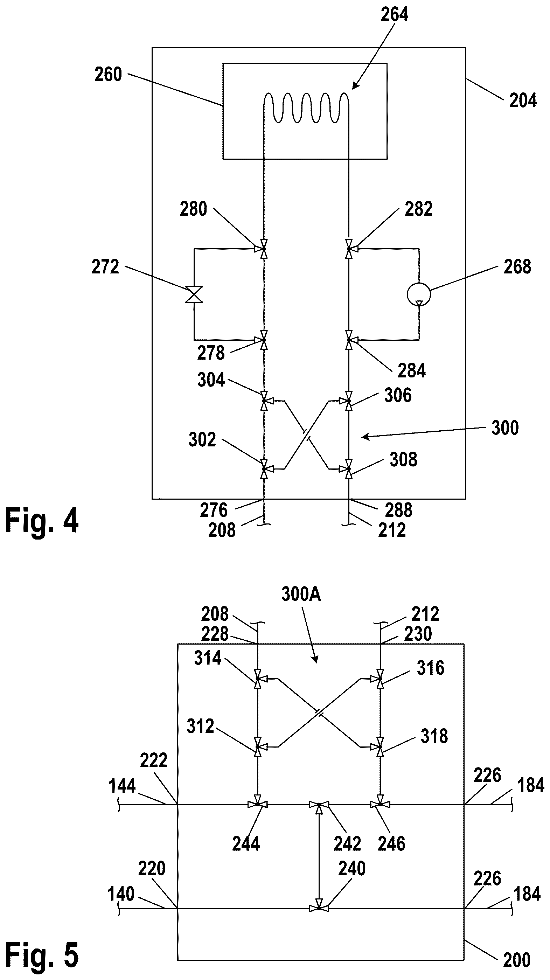

When in a fourth cooling mode, which is the inverse of the fourth heating mode (D), the first valve 240 and third valve 244 isolate the outdoor unit 108 from the cooling cycle. As a result, the reversing valve 124 is not in the refrigerant circuit in the fourth cooling mode. In embodiments configured for only cooling using the TES arrangement 104, the positions of the compressor 268 and expansion valve 272 may be switched from the configuration shown in Fig. 3. Alternatively, to enable both the fourth heating and cooling modes, the compressor 268 may be configured as a bidirectional compressor. In further embodiments, a reversing valve arrangement 300, 300A may be arranged in the TES module 204, as shown in Fig. 4, or in the valve manifold 200, as shown in Fig. 5, to enable reversing of the flow through the refrigerant loop 116 when the outdoor unit 108 is isolated from the refrigerant loop 116.

Referring now to Fig. 4, the reversing valve arrangement 300 in the TES module 204 is arranged, for example, between the two valves 278, 284 and the first and second module ports 276, 288. The reversing valve arrangement 300 as depicted includes four three-way valves 302, 304, 306, 308, which are configured to selectively reverse the flow direction through the TES module 204 such that, when reversed in the fourth cooling mode, the refrigerant flows from the second module port 288, through the valves 308, 304, and 278, the expansion valve 272, the TES heat exchanger 264, the valve 282, the compressor 268, the valves 284, 306, 302, and out from the TES module 204 via the first module port 276.

Similarly, as depicted in Fig. 5, the reversing valve arrangement 300A in the valve manifold 200 is configured such that, in the fourth cooling mode, the refrigerant from the indoor unit 112 enters through the fourth port 226, passes through the fourth valve 246, the valves 318, 314, and flows to the TES module 204 via the fifth refrigerant line 208 in the opposite direction from the fourth heating mode. The refrigerant returning to the valve manifold 200 from the TES module 204 flows through the sixth refrigerant line 212, the sixth port 230, the valves 316, 312, the third valve 244, the second valve 242, and the first valve 240, back to the indoor unit 112 via the fourth port 226 and the fourth refrigerant line 184.

As such, the reversing valve arrangement 300, 300A in either the valve manifold 200 or the TES module 204 enables the refrigerant to flow in the fourth cooling mode in the opposite direction as in the fourth heating mode, even while the reversing valve 124 is isolated from the refrigerant loop. Additionally, the reader should appreciate that while the reversing valve arrangements 300, 300A are shown with four three-way valves, the reversing valve arrangements 300, 300A may be implemented with any suitable reversing valve configuration, for example via a single solenoid operated valve similar to the reversing valve 124 shown in Fig. 1.

In some embodiments, the controller 216 incorporates intelligent algorithms that determine the optimal times for charging and discharging the TES module 204 based on predictive analytics of energy demand, weather forecasts, and electricity tariff rates. The controller 216 adjusts the operation of the compressor 120 and adjusts the flow paths of the refrigerant loop 116 using the plurality of valves to store or release thermal energy in the phase-change material 260, to minimize energy costs, maximize efficiency, and prolong the lifetime of the heat pump system 100.

The controller 216 may be configured to operate the heat pump system 100 in one of the five heating modes, the five cooling modes, or the standby (off) mode based on the ambient external temperature, the ambient internal temperature in the conditioned space, and the temperature, state, or density of the phase-change material 260. In some embodiments, the controller 216 is configured to implement a method similar to the methods described in US Patent Application Serial No. 18/920,132, the contents of which are incorporated by reference herein in their entirety.

The TES arrangement 104 disclosed herein is designed to be easily retrofitted onto an existing air conditioner or heat pump refrigerant loop without the installer having to worry about placement, plumbing, and wiring of various valves or the control logic that must be implemented for each. Installation of the TES arrangement 104 in an existing air conditioning or heat pump system is accomplished by first discharging and collecting the refrigerant in the existing system, and then cutting two sections of piping from the existing system (i.e. in the line formed by the first refrigerant line 140 and fourth refrigerant line 184, and the line formed by the second refrigerant line 144 and third refrigerant line 180). The installer then makes four new connections from existing piping to the valve manifold 200, in particular at the four valve ports 220-226, and making two connections from the valve manifold 200 to the TES module 204 at the fifth and sixth ports 228, 230, if the valve manifold 200 and TES module 204 are not already connected prior to installation. The copper or metal pipes forming refrigerant lines 140, 144, 180, 184, 208, and 212 can be connected to one another and to the existing system by, for example, brazing, welding, soldering, and/or using a leak-free quick-connect device. Once all the connections have been made, the installer recharges the refrigerant back into the refrigerant loop 116. The installer further connects the valve manifold 200 and TES module 204 to the electrical panel of building, connects the TES arrangement 104 to the existing AC/HP controller 216 and/or thermostat, updates the software of the controller 216 as needed, and finally tests and verifies the complete heat pump system 100.

The TES arrangement 104 disclosed herein may be incorporated into a variety of refrigeration systems, including a heat pumps, air conditioners, stationary energy storage systems, and other thermal management system, including electric vehicle thermal management systems and vehicle air conditioning systems. In addition, when used in commercial or residential heat pump or air conditioning systems, the TES arrangement 104 provides a simple yet effective way to time-shift the energy consumption of the heat pump system 100 by storing energy in the phase-change material 260 during low demand times (i.e. off-peak times), and then using the energy stored in the phase-change material 260 to heat or cool the conditioned space during high demand times, when peak electricity rates may be in effect. Moreover, since the compressor 268 in the TES module 204 is smaller (i.e. uses less energy) than the compressor 120 in the outdoor unit 108, the heating or cooling of the conditioned space using only the TES arrangement 104 in the fourth heating and cooling modes can be accomplished with reduced energy consumption compared to traditional air conditioning or heat pump systems.

It will be appreciated that variants of the above-described and other features and functions, or alternatives thereof, may be desirably combined into many other different systems, applications or methods. Various presently unforeseen or unanticipated alternatives, modifications, variations or improvements may be subsequently made by those skilled in the art that are also intended to be encompassed by the foregoing disclosure.

## Claims

1. A thermal energy storage (TES) arrangement for a heat pump system, the TES arrangement comprising:
a phase-change material;
a TES heat exchanger configured to exchange heat with the phase-change material; and
a valve manifold fluidly connected to the TES heat exchanger and configured to fluidly connect to a conditioned space heat exchanger of the heat pump system and an ambient heat exchanger of the heat pump system, the valve manifold configured to selectively form a refrigerant loop between at least two of the TES heat exchanger, the conditioned space heat exchanger, and the ambient heat exchanger.

2. The TES arrangement of claim 1, wherein the valve manifold comprises a plurality of valves configured to selectively connect the conditioned space heat exchanger, the ambient heat exchanger, and the TES heat exchanger to one another.

3. The TES arrangement of claim 2, wherein the valve manifold further comprises a first port and a second port, which are fluidly connected to the ambient heat exchanger, a third port and a fourth port, which are fluidly connected to the conditioned space heat exchanger.

4. The TES arrangement of claim 3, wherein:
the plurality of valves includes a first valve, a second valve, a third valve, and a fourth valve, each of the first, second, third, and fourth valves being configured as three-way valves,
the first valve is connected to the first port, the fourth port, and the second valve,
the second valve is connected to the first valve, the third valve, and the fourth valve,
the third valve is connected to the second port, a first side of the TES heat exchanger, and the second valve, and
the fourth valve is connected to the third port, a second side of the TES heat exchanger, and the third valve.

5. The TES arrangement of claim 4, further comprising:
a TES module, in which the phase-change material and the TES heat exchanger are arranged.

6. The TES arrangement of claim 5, wherein the valve manifold further comprises a fifth port and a sixth port, which are fluidly connected to the TES heat exchanger in the TES module.

7. The TES arrangement of claim 6, further comprising a reversing valve arrangement configured to reverse a direction of flow in the refrigerant loop.

8. The TES arrangement of claim 7, wherein the valve manifold includes the reversing valve arrangement, and the reversing valve arrangement is arranged between the third valve and the fifth port, and between the fourth valve and the sixth port.

9. The TES arrangement of claim 5, wherein the TES module includes a second compressor and an expansion valve, which are fluidly connected on opposite sides of the TES heat exchanger.

10. The TES arrangement of claim 9, wherein the TES module further comprises a first pair of valves configured to selectively connect or isolate the second compressor from the refrigerant loop, and a second pair of valves configured to selectively connect or isolate the expansion valve from the refrigerant loop.

11. The TES arrangement of claim 1, further comprising:
a controller operably connected to the valve manifold and configured to operate the valve manifold to selectively connect the conditioned space heat exchanger, the ambient heat exchanger, and the TES heat exchanger to one another.

12. The TES arrangement of claim 11, wherein:
the controller is configured to selectively operate the valve manifold in a first mode, a second mode, a third mode, and a fourth mode,
in the first mode, controller operates the valve manifold to form the refrigerant loop between the ambient heat exchanger and the TES heat exchanger,
in the second mode, controller operates the valve manifold to form the refrigerant loop between the ambient heat exchanger and the conditioned space heat exchanger,
in the third mode, controller operates the valve manifold to form the refrigerant loop between the ambient heat exchanger, the TES heat exchanger, and the conditioned space heat exchanger, and
in the fourth mode, controller operates the valve manifold to form the refrigerant loop between the TES heat exchanger and the conditioned space heat exchanger.

13. A valve manifold comprising:
a first port and a second port configured to fluidly connect to an ambient heat exchanger of a heat pump system;
a third port and a fourth port configured to fluidly connect to a conditioned space heat exchanger of the heat pump system;
a first valve connected to the first port, the fourth port, and a second valve,
the second valve, which is connected to the first valve, a third valve, and a fourth valve,
the third valve, which is connected to the second port, a first side of a TES heat exchanger, and the second valve, and
the fourth valve, which is connected to the third port, a second side of the TES heat exchanger, and the third valve,
wherein the valve manifold is configured to selectively form a refrigerant loop between at least two of the TES heat exchanger, the conditioned space heat exchanger via the third and fourth ports, and the ambient heat exchanger via the first and second ports.

14. The valve manifold of claim 13, further comprising:
a fifth port and a sixth port, which are fluidly connected to the TES heat exchanger.

15. The valve manifold of claim 14, further comprising:
a reversing valve arrangement configured to reverse a direction of flow in the refrigerant loop, the reversing valve arrangement being connected between the third valve, the fourth valve, and the TES heat exchanger.

16. The valve manifold of claim 15, further comprising:
a controller operably connected to the first, second, third, and fourth valves and configured to selectively operate the first, second, third, and fourth valves in a first mode, a second mode, a third mode, and a fourth mode, wherein:
in the first mode, controller is configured to operate the first, second, third, and fourth valves to form the refrigerant loop between the ambient heat exchanger and the TES heat exchanger,
in the second mode, controller is configured to operate the first, second, third, and fourth valves to form the refrigerant loop between the ambient heat exchanger and the conditioned space heat exchanger,
in the third mode, controller is configured to operate the first, second, third, and fourth valves to form the refrigerant loop between the ambient heat exchanger, the TES heat exchanger, and the conditioned space heat exchanger, and
in the fourth mode, controller is configured to operate the first, second, third, and fourth valves to form the refrigerant loop between the TES heat exchanger and the conditioned space heat exchanger.

17. A heat pump system comprising:
an outdoor unit comprising an ambient heat exchanger configured to exchange heat with ambient air;
an indoor unit comprising a conditioned space heat exchanger configured to exchange heat with a conditioned space; and
a thermal energy storage ("TES") arrangement comprising:
a phase-change material;
a TES heat exchanger configured to exchange heat with the phase-change material; and
a valve manifold fluidly connected to the TES heat exchanger, the indoor unit, and the outdoor unit, the valve manifold configured to selectively form a refrigerant loop between at least two of the TES heat exchanger, the conditioned space heat exchanger, and the ambient heat exchanger.

18. The heat pump system of claim 17, wherein the valve manifold comprises:
a plurality of valves configured to selectively connect the conditioned space heat exchanger, the ambient heat exchanger, and the TES heat exchanger to one another;
a first port and a second port, which are fluidly connected to the ambient heat exchanger; and
a third port and a fourth port, which are fluidly connected to the conditioned space heat exchanger.

19. The heat pump system of claim 18, wherein:
the plurality of valves includes a first valve, a second valve, a third valve, and a fourth valve, each of the first, second, third, and fourth valves being configured as three-way valves,
the first valve is connected to the first port, the fourth port, and the second valve,
the second valve is connected to the first valve, the third valve, and the fourth valve,
the third valve is connected to the second port, a first side of the TES heat exchanger, and the second valve, and
the fourth valve is connected to the third port, a second side of the TES heat exchanger, and the third valve.

20. The heat pump system of claim 17, further comprising:
a controller operably connected to the valve manifold and configured to operate the valve manifold to selectively connect the conditioned space heat exchanger, the ambient heat exchanger, and the TES heat exchanger to one another, the controller being configured to selectively operate the valve manifold in a first mode, a second mode, a third mode, and a fourth mode, wherein:
in the first mode, controller operates the valve manifold to form the refrigerant loop between the ambient heat exchanger and the TES heat exchanger,
in the second mode, controller operates the valve manifold to form the refrigerant loop between the ambient heat exchanger and the conditioned space heat exchanger,
in the third mode, controller operates the valve manifold to form the refrigerant loop between the ambient heat exchanger, the TES heat exchanger, and the conditioned space heat exchanger, and
in the fourth mode, controller operates the valve manifold to form the refrigerant loop between the TES heat exchanger and the conditioned space heat exchanger.
